Europäisches Patentamt

European Patent Office

Office européen des brevets

(11) Publication number: **0 387 206**
**A1**

# EUROPEAN PATENT APPLICATION

(21) Application number: **90830067.6**

(22) Date of filing: **27.02.90**

(51) Int. Cl.5: **B60T 13/26, B60T 15/24**

(30) Priority: **08.03.89 IT 6715989**

(43) Date of publication of application:
**12.09.90 Bulletin 90/37**

(84) Designated Contracting States:
**AT BE DE ES FR GB IT NL SE**

(71) Applicant: **BENDIX HEAVY VEHICLE SYSTEMS ITALIA S.P.A.**
**Via Adriano 81**
**I-20128 Milano(IT)**

(72) Inventor: **Angelillo, Domenico**
**Via Pisa 54**
**I-20099 Sesto S. Giovanni (Milano)(IT)**

(74) Representative: **Quinterno, Giuseppe et al**
**c/o Jacobacci-Casetta & Perani S.p.A. Via Alfieri, 17**
**I-10121 Torino(IT)**

(54) A valve unit for controlling the braking of a trailer and a braking system including the valve unit.

(57) The valve unit comprises a body (20) with a valve (80, 81) for controlling communication between a supply chamber (C) which is intended to be connected to a compressed-air supply (3) and an outlet aperture (122) connected to a brake-operating pipe of a trailer. The valve (80, 81) is operable as a result of an increase in pressure in a first operating chamber (A) and/or in a second operating chamber (B) defined in the body (20).

The valve unit is provided with a safety valve device (200) adapted to put the first and second operating chambers (A, B) into communication with each other when the pressure in the first chamber (A) falls below a predetermined value during service braking.

FIG. 1

## A valve unit for controlling the braking of a trailer and a braking system including the valve unit

The present invention relates to a valve unit for controlling the braking of a trailer.

More specifically, the subject of the invention is a valve unit comprising a body with a valve for controlling communication between a supply chamber which is intended to be connected to a compressed-air supply and an outlet aperture connected to a brake-operating pipe of a trailer, the valve being operable as a result of an increase in pressure in a first operating chamber and/or in a second operating chamber defined in the body.

The valve unit according to the invention is characterised in that it is provided with a safety valve device which is adapted to put the first and second operating chambers into communication with each other when the pressure in the first chamber falls below a predetermined value during service braking.

The safety valve device may conveniently be formed integrally with the valve body of the unit or, alternatively, may be physically separate and distinct from the valve body and connected thereto by means of pipes.

Further characteristics and advantages of the invention will become clear from the detailed description which follows with reference to the appended drawings, provided purely by way of non-limiting example, in which:

Figure 1 is a diagram which shows part of a pneumatic braking system of a motor vehicle adapted for towing a trailer, the system including a valve unit provided with a safety device according to the present invention, and

Figure 2 shows a part of the diagram of Figure 1, with a safety device according to the invention shown in axial section.

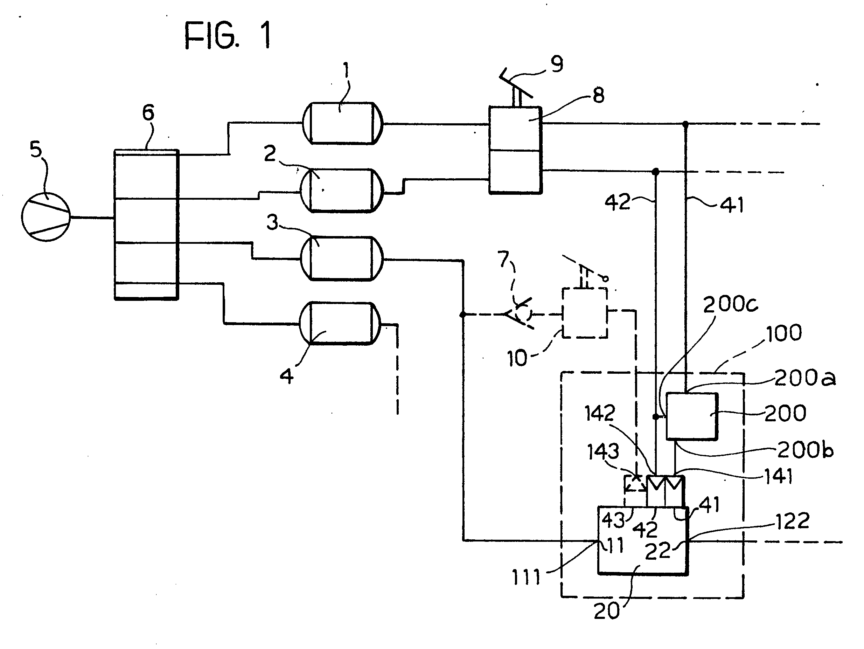

The braking system shown in Figure 1 includes a plurality of reservoirs 1 to 4 which store compressed air produced by a compressor 5.

A four-section protection valve of known type is indicated 6 and has the function of distributing the compressed air produced by the compressor 5 between the four independent circuits connected to the reservoirs 1 to 4. This valve may be constituted, for example, by the valve produced and marketed by the Applicant under the trade reference VPS 41.

Typically, the protection valve 6 is formed so as to enable pressure to be supplied to the reservoirs 1 to 4 when the pressure of the air supplied to its inlet exceeds a predetermined value, for example 7.5 bars. Moreover, this valve is formed so that, in the event of damage to one of the circuits, it enables the undamaged circuits to be supplied until a calibration value lower than the previous value and equal, for example, to 4.5 bars is reached.

A two-section distributor is indicated 8 and is operable by means of a pedal 9 in order to operate the service braking in the front and rear braking circuits of the vehicle and the trailer (if any). The distributor 8 is therefore of the duplex or tandem type and its inlets are connected to the reservoirs 1 and 2. The outlets of the two sections of the distributor 8 are connected, in a manner not illustrated, to the braking elements of the vehicle, also not shown.

The braking system shown in Figure 1 also includes a valve unit, generally indicated 100, for controlling the braking of a trailer (if any). The unit includes a valve 20 of known type for operating the braking of the trailer. The valve device 20 may be constituted by a so-called triple-control servo-distributor such as that produced and marketed by the Applicant under the trade reference AC 595 or the type described in European patent application No. EP-A-0 277 465.

The valve device 20 has an inlet 111 connected to the reservoir 3 and an outlet 122 connected to a pipe (not shown) for operating the brakes of the trailer.

The device also has two further inlets 141, 142 connected to the outlets of the first and second sections of the duplex distributor 8, respectively.

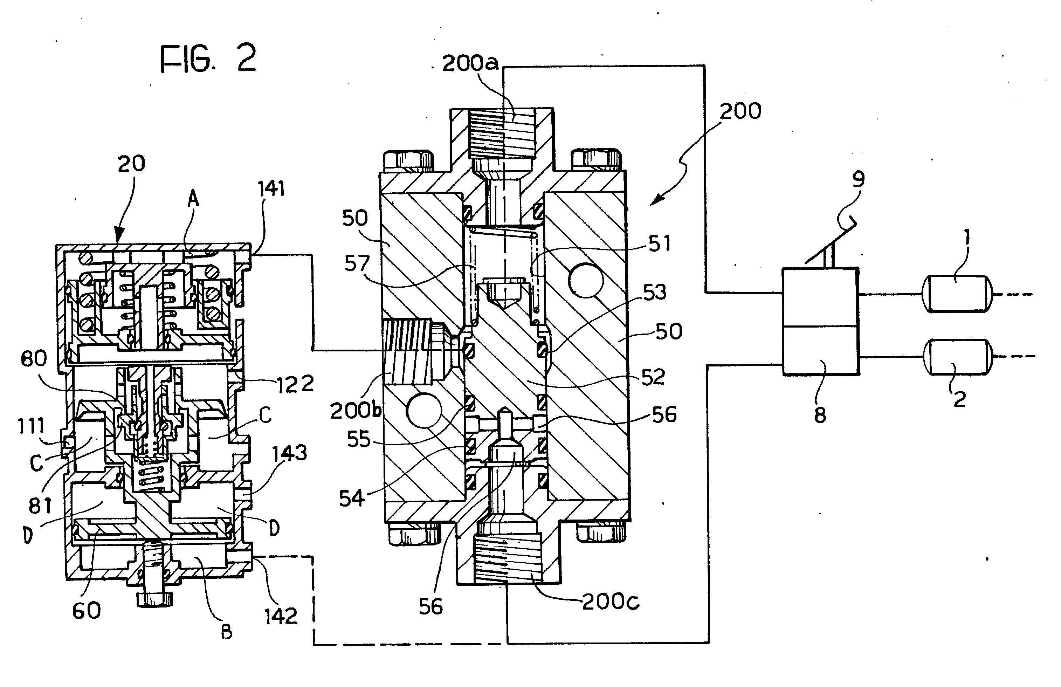

If, as shown in Figure 2, the valve device 20 is of the triple-control type, it also has a further aperture 143 connected to the output of a manually-operated distributor 10 for operating the parking and emergency braking, which is in turn connected to the reservoir 3 with the interposition of a non-return valve 7, as shown in broken outline in Figure 1.

In any case, the inlet connector 111 of the valve device 20 opens into a supply chamber within the valve body of the device (the chamber is indicated C in Figure 2), whilst the apertures 141 and 142 communicate respectively with first and second operating chambers also formed in the body (indicated A and B in Figure 2). The third aperture 143, if any, also communicates with an operating chamber in the body of the valve device 20 (indicated D in Figure 2).

In operation, in the rest condition, that is, when neither the service braking nor the parking and emergency braking are operated, the chambers (A, B) of the valve device 20 which communicate with the apertures 141 and 142 are at atmospheric pressure, whilst the third operating chamber (D) (if any), that is, the one which communicates with the aperture 143 (if any), is kept under pressure.

An internal valve (indicated 80 and 81 in Figure 2) is provided in the device 20 and controls communication between the inlet and outlet connectors 111 and 122. The valve can be opened to operate the braking of the trailer, as a result of the application of fluid pressure to the aperture 141 and/or the aperture 142, or as a result of a reduction in the pressure in the operation chamber (D) which communicates with the third aperture 143 (if any).

During service braking, pressure is supplied to the apertures 141 and 142 of the valve device 20 as a result of the operation of the distributor 8. This device consequently supplies, through its outlet 122, a pressure for operating the brakes of the trailer.

If, as in the embodiment of Figure 2, the valve device 20 is of the triple-control type, the operation of the distributor 10 during parking and emergency braking puts the operating chamber (D), which communicates with the aperture 143, into communication with an exhaust aperture so as to cause a rapid reduction in the pressure in that chamber and the application of the brakes.

According to the invention, the valve 20 for operating the brakes of the trailer is provided with a safety valve device, indicated 200. As can be seen from the drawings, this safety device has a first inlet 200a connected to the outlet of the first section of the duplex distributor 8 and an outlet 200b connected to the inlet 141 of the valve device 20.

The safety device 200 has a further inlet 200c connected to the outlet of the second section of the duplex distributor 8.

In the embodiment shown in Figure 2, the safety device 200 is separate and distinct from the valve device 20 and comprises a body 50 defining an axial duct 51 in the opposite ends of which are inserted two connectors constituting the apertures indicated 200a and 200c above.

A distributor member 52 is sealingly slidably mounted in the duct 51 of the body 50.

The aperture 200b opens into the central portion of the duct 51.

The distributor member 52 carries two sealing rings 53 and 54 at its outer ends and an intermediate sealing ring 55. A passage 56 is formed in the member 52 and extends between that surface of the member which faces the connector 200c and the portion of its lateral surface between the sealing rings 54 and 55. In the embodiment shown by way of example, the passage is formed by the intersection of a diametral through-hole and a blind end hole.

A helical spring, indicated 57, is interposed between an end surface of the connector 200a and the facing portion of the distributor member 52. When pressurised fluid is not supplied to the connectors 200a and 200c, the spring 57 keeps the member 52 in the position shown in Figure 2, in which it allows communication between the connectors 200a and 200b, and hence between the first outlet section of the distributor 8 and the aperture 141 of the valve device 20.

If the braking system shown in Figure 1 were perfectly efficient, the member 52 would remain substantially in the position shown in Figure 2, even during service or parking and emergency braking.

However, if no pressure is supplied to the inlet connector 200a of the protection device 200 during a service braking stage (for example, because of damage to the circuit of the braking system associated with the reservoir 1 of Figure 1), the distributor member 52 moves upwards as a result of the prevailing force exerted thereon by the pressure supplied to the connector 200c. The member 52 consequently moves to a working position, not shown, in which the sealing ring 53 engages the wall of the upper portion of the duct 51, above the connector 200b, disconnecting the connectors 200a and 200b from each other and at the same time putting the connectors 200b and 200c into communication by means of the passage 56. The fluid pressure output by the second section of the pedal-operated distributor 8 is therefore provided both to the inlet 141 and to the inlet 142 of the valve device 20, causing the brakes to be applied.

As experts in the art will immediately be able to appreciate, the operation of the valve device 20 is therefore ensured in any event should one of the two braking circuits controlled by the two sections of the pedal-operated distributor 8 be damaged. Moreover, as can readily be confirmed, the connection between the second output section of the pedal-operated distributor 8 and the inlet 142 of the valve device 20 is in fact superfluous, and this connection has therefore been indicated in broken outline in the drawing.

If the valve device 20 is of the type defined above as a triple control device (for example, of the type illustrated in Figure 2), the safety device 200 according to the invention effectively avoids a problem which, together with a possible solution, is described in previous European patent application No. 89830527.1. This problem will now be described briefly with reference to Figure 1 and it will be explained how the device according to the present invention enables it to be remedied efficiently.

The triple-control valve device 20 illustrated. in Figure 2 includes a movable operating element, indicated 60, which is exposed to the opposing forces of the fluid pressures in the operating chambers B and D defined above.

In the event of damage, that is, a leakage, in one of the four circuits connected to the outlets of the protection valve 6, the pressures in the reservoirs of the intact circuits fall to a lower value than normal, for example, the value of 4.5 bars indicated above. In this case, however, the pressure downstream of the hand-operated distributor 10 (and hence in the chamber D) remains higher, for example at 7-7.5 bars, due to the presence of the non-return valve 7.

In a normal braking system in which the inlet apertures 141 and 142 of the valve device 20 of Figure 1 are coupled directly to the outlets of the pedal-operated distributor 8, this can lead to wholly unsatisfactory braking conditions.

In fact, if it is assumed that the pressure in the reservoir 1 falls to zero as a result of damage, the operation of the protection valve 6 will prevent the reservoirs 2 to 4 from being exhausted but the pressure therein will fall, for example, to the value of 4.5 bars. The pressure in the chamber D of the device 20, however, will remain higher, for example at 7-7.5 bars, as a result of the action of the non-return valve 7.

If the distributor 8 of a prior-art braking system were operated under these conditions, no pressure would be applied to the aperture 141 of the valve device, whilst a pressure equal at the most to 4.5 bars would be applied to the inlet connector 142. The force acting the movable element 60 which operates the valve 80-81 of the valve device 20 would thus be very low and the braking pressure which the device 20 could deliver would consequently be reduced. The braking achieved would therefore be unsatisfactory.

In the system according to the invention, the problem described above is avoided since, as already stated above, a positive brake-operating pressure is always provided at the inlet 141 of the valve device 20, even in the event of damage to the braking circuit associated with the first (and main) section of the pedal operated distributor 8.

The safety valve device 200 may be formed integrally with the valve device 20, that is, within a single valve body. This solution obviously simplifies the way in which the valve unit 100 as a whole is connected to the rest of the system.

## Claims

1. A valve unit for controlling the braking of a trailer, comprising a valve body (20) with a valve (80, 81) for controlling communication between a supply chamber (C) which is intended to be connected to the compressed-air supply (3) and an outlet aperture (122) connected to a brake-operating pipe of a trailer, the valve (80, 81) being operable as a result of an increase in pressure in a first operating chamber (A) and/or in a second operating chamber (B) defined in the body (20), characterised in that it also includes a safety valve device (200) which is adapted to put the first and second operating chambers (A, B) into communication with each other when the pressure in the first chamber (A) falls below a predetermined value during service braking.

2. A valve unit according to Claim 1, characterised in that the safety valve device (200) includes a body (50) defining a duct (51) with first and second end apertures (200a, 200c) to which the fluid pressures destined for the first and second operating chambers (A, B) are applied during service braking, the passage (51) having in its intermediate portion a third aperture (200) which communicates with the first operating chamber (A), a distributor member (52) being sealingly slidable in the duct (51) and having end surfaces which are subject to the pressures provided at the end apertures (200a, 200c) of the duct (51), the member (52) being adapted to assume

a rest condition in which it enables communication between the first and third apertures (200a, 200b) of the duct (51) and in which prevents communication between the second (200c) and the other apertures (200a, 200b) of said duct, when the pressure supplied to the second aperture (200c) of the duct (51) exceeds a predetermined value during braking, and

a working position in which it prevents communication between the first and third apertures (200a, 200b) and enables communication between the second and third apertures (200c, 200b) of the duct (51) when the pressure supplied to the first aperture (200a) of the duct (51) falls below a predetermined value during braking.

3. A valve unit according to Claim 2, characterised in that a passage (56) is formed in the distributor member (52) and extends between that surface of the member which faces the second aperture (200c) of the duct (51) and its lateral surface the passage (56) being adapted to put the second and third apertures (200c, 200b) of the duct (51) into communication when the distributor member (52) is in the working position.

4. A valve unit according to any one of the preceding claims, characterised in that the safety valve device (200) is physically separate and distinct from the valve body (20) and is connected thereto.

5. A valve unit according to one of Claim 1 to 3, characterised in that the safety device (200) is integral with the valve body (20).

6. A braking system for a vehicle adapted to tow a trailer, including a valve unit according to one or more of the preceding claims.

FIG. 1

FIG. 2

1  2

9  8

200

51  53  50  52  56

200a  200c

50  57  200b  55  54  56

141  122  143  142

A  C  D  B

20  60

80  111  C  81  D

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-2012204 (GRAUBREMSE)<br>* the whole document *<br>--- | 1 | B60T13/26<br>B60T15/24 |
| A,D | EP-A-0277465 (MAGNETI MARELLI)<br>--- | | |
| A | DE-A-1958042 (ROBERT BOSCH)<br>------ | | |

**TECHNICAL FIELDS SEARCHED (Int. Cl.5 )**

B60T

The present search report has been drawn up for all claims

| Place of search | Date of completion of the search | Examiner |
|---|---|---|
| THE HAGUE | 26 JUNE 1990 | HARTEVELD C.D.H. |